# EUROPEAN PATENT APPLICATION

(11) **EP 2 575 037 A1**
(43) Date of publication of application: **03.04.2013**
(21) Application number: 12179489.5
(22) Date of filing: 07.08.2012
(51) Int. Cl.: G06F 9/445

(54) **Generation apparatus, generation method and computer readable information recording medium**

(30) Priority: 29.09.2011 JP 2011215677
(71) Applicant: FUJITSU LIMITED, Kawasaki-shi, Kanagawa 211-8588 (JP)
(72) Inventor: Iriumi, Takamitsu, Kanagawa, 211-8588 (JP)
(74) Representative: HOFFMANN EITLE

(57) **Abstract**

A generation apparatus includes a recording part configured to detect an operation carried out during a process of applying a patch program and record history information of the operation in a storage part; a first generation part configured to generate a script including an instruction for performing the operation indicated by the history information; and a second generation part configured to generate an execution program for executing the patch program based on the generated script.

## Description

### FIELD

The embodiment discussed herein is directed to a generation apparatus, a generation method, a generation program, an execution program and a computer readable information recording medium.

### BACKGROUND

In a technical field of software, a "patch" means data that is used to update part of software that has been already released. A patch is released for the purpose of correcting a bug, extending a function, or the like, by a vendor of software to which the patch is to be applied.

Generally speaking, a form, a method of applying and so forth of a patch differ for each set of software or for each vendor. In other words, a form, a method of applying and so forth of a patch have not been standardized, and a user may carry out different work for each patch when applying the patch.

Patent References:
Patent reference No. 1: Japanese Laid-Open Patent Application No. 2010-237852
Patent reference No. 2: Japanese Laid-Open Patent Application No. 2010-79438

In an environment such as a data center in which many computers having similar software configurations are managed, work of applying a patch may be carried out to the many computers. However, since a form, a method of applying and so forth of a patch differ for each patch or for each vendor as mentioned above, it may be difficult to automate work of applying a patch.

In particular, recently, it is general to provide many virtual servers having similar software configurations in an environment of operating a cloud system. Accordingly, a load of work of applying a patch to many computers having similar software configurations may become further heavier.

### SUMMARY

In view of the above-mentioned problem, an object of one aspect is to reduce the workload of applying a patch.

A generation apparatus in one concept includes a recording part configured to detect an operation carried out during a process of applying a patch program and record history information of the operation in a storage part; a first generation part configured to generate a script including a command for performing the operation indicated by the history information; and a second generation part configured to generate an execution program for executing the patch program based on the generated script.

### BRIEF DESCRIPTION OF DRAWINGS

FIG. 1 depicts a hardware configuration of a patch generation apparatus according to an embodiment;
FIG. 2 depicts a software configuration of the patch generation apparatus according to the embodiment;
FIG. 3 illustrates functions of respective parts included in a patch conversion part depicted in FIG. 2;
FIG. 4 depicts one example of a structure of a common-form patch;
FIG. 5 is a flowchart generally illustrating one example of a common-form patch generation process;
FIG. 6 is a flowchart illustrating one example of a process of recording a process sequence log;
FIG. 7 depicts one example of a stopping-target service list;
FIG. 8 is a flowchart illustrating one example of a file operation recording process;
FIG. 9 depicts one example of an operation-target file list;
FIG. 10 depicts one example of a resource operation record list;
FIG. 11 is a flowchart illustrating one example of a registry operation recording process;
FIG. 12 depicts one example of a operation-target registry key list;
FIG. 13 depicts one example of recording records of registry keys in a resource operation record list;
FIG. 14 is a flowchart illustrating one example of a process of generating a common-form patch;
FIG. 15 is a flowchart illustrating one example of a process of generating a script file;
FIG. 16 depicts one example of description contents of a script file;
FIG. 17 is a flowchart illustrating one example of a process of additionally recording a file operation script;
FIG. 18 is a flowchart illustrating one example of a process of additionally recording a registry operation script;
FIG. 19 depicts a software configuration example of a patch applying apparatus in one embodiment;
FIG. 20 is a flowchart generally illustrating one example of a process of applying a common-form patch;
FIG. 21 is a flowchart illustrating one example of a process of executing a script;
FIG. 22 is a flowchart illustrating one example of a process of analyzing a definition part of a script file;
FIG. 23 is a flowchart illustrating one example of a process of stopping a service;
FIG. 24 is a flowchart illustrating one example of a process of saving a registry key;
FIG. 25 depicts one example of a registry key saving list;
FIG. 26 is a flowchart illustrating one example of a file saving process;
FIG. 27 is a flowchart illustrating one example of a process of executing a command of a script;
FIG. 28 is a flowchart illustrating one example of a process of starting up a service;
FIG. 29 is a flowchart illustrating one example of a rollback process; and
FIG. 30 depicts one example of an information processing system according to one embodiment.

### DESCRIPTION OF EMBODIMENTS

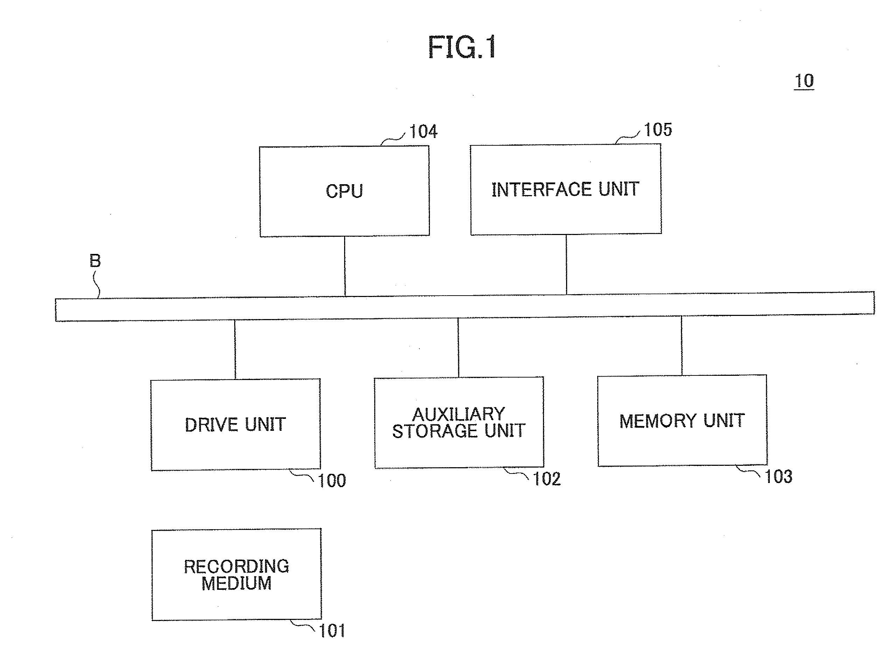

Below, embodiments will be described. FIG. 1 depicts a hardware configuration example of a patch generation apparatus according to an embodiment. The patch generation apparatus 10 of FIG. 1 includes a drive unit 100, an auxiliary storage unit 102, a memory unit 103, a central processing unit (CPU) 104 and an interface unit 105, which are mutually connected by a bus B.

A program that performs processes in the patch generation apparatus 10 is provided by a recording medium 101. When the recording medium 101 in which the program is stored is set in the drive unit 100, the program is installed in the auxiliary storage unit 102 via the drive unit 100 from the recording medium 101. However, installing of the program is not necessarily carried out from the recording medium 101. Installing of the program may also be carried out from another computer via a communication network. The auxiliary storage unit 102 stores the installed program, other files and/or data if necessary.

The memory unit 103 reads the program from the auxiliary storage unit 102 in a case where an instruction of starting up the program is given, and stores the read program. The CPU 104 executes functions of the patch generation apparatus 10 according to the program stored in the memory unit 103. The interface unit 105 is used as an interface for connecting with a communication network.

It is noted that as a specific example of the recording medium 101, a portable recording medium may be cited such as a compact disk read only memory (CD-ROM), a digital versatile disk (DVD), a USB memory or the like. Further, as a specific example of the auxiliary storage unit 102, a hard disk drive (HDD), a flash memory or the like may be cited. Any one of the recording medium 101 and the auxiliary storage unit 102 corresponds to a computer readable information recording medium.

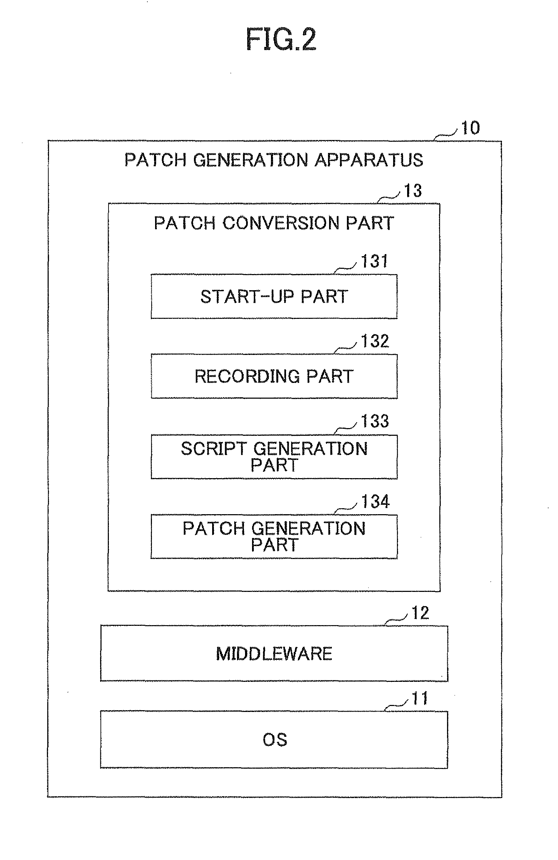

FIG. 2 depicts a software configuration example of the patch generation apparatus 10 according to the embodiment. In FIG. 2, the patch generation apparatus 10 includes an operating system (OS) 11, middleware 12 and a patch conversion part 13.

The OS 11 and the middleware 12 are examples of software to which a patch may be applied. The type of the OS 11, the function of the middleware 12 and so forth are not limited to specific ones. Further, an application program may be also one to which a patch may be applied. It is noted that in the embodiment, for the purpose of convenience, it is assumed that a form of a patch for the OS 11 and a form of a patch for the middleware 12 are different from one another.

The patch conversion part 13 is released by a vendor of the OS 11 or the middleware 12. The patch conversion part 13 converts a patch having a form unique to the vendor (hereinafter, simply referred to as a "unique-form patch") into a patch having a common form (common-form patch CP). The patch conversion part 13 is realized by a process that is performed as a result of a program installed in the patch generation apparatus 10 being executed by the CPU 104.

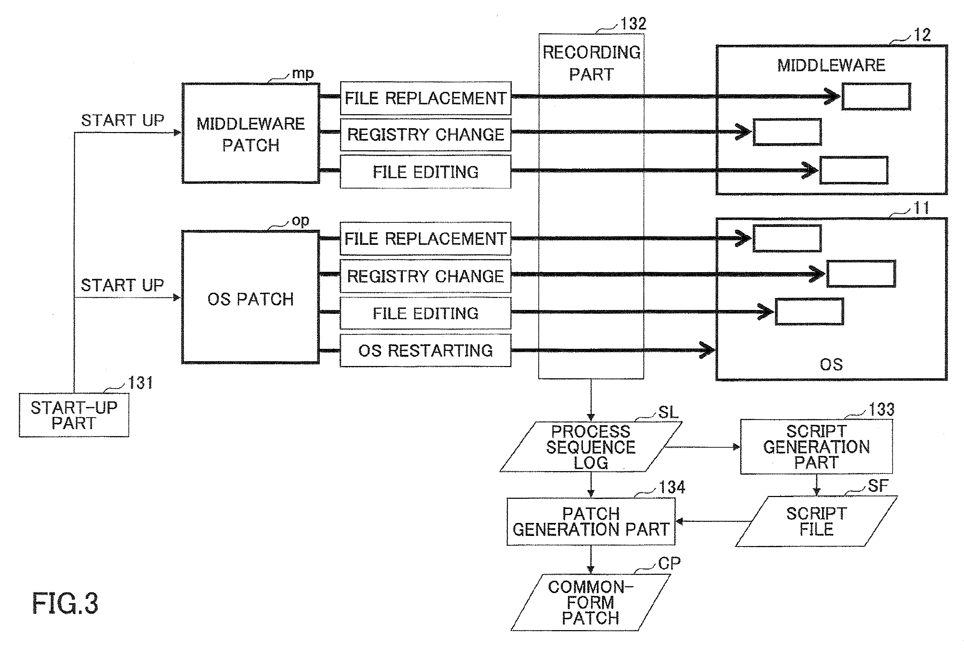

In FIG. 2, the patch conversion part 13 includes a start-up part 131, a recording part 132, a script generation part 133 and a patch generation part 134. Functions of these parts will be described using FIG. 3.

FIG. 3 illustrates functions of the respective parts included in the patch conversion part 13. The start-up part 131 starts up a unique-form patch as a process to be converted into a common-form patch CP. The unique-form patch thus started up by the start-up part 131 starts a process of applying the patch. The recording part 132 detects an operation performed on a software resource during the process of applying the patch thus carried out by the unique-form patch. In the embodiment, the software resource means a file or a registry concerning the OS 11 or the middleware 12, the OS 11 or the middleware 12 that is in an executed state, or the like. More specifically, the recording part 132 hooks (or captures) a call for a system call during a process of applying the patch, and thus, detects an execution of a process such as a file operation, a registry operation, restarting the OS 11 and so forth. However, detecting an operation performed on a software resource may be carried also in another method. Further, in an environment that has no registry, a registry operation may be omitted from targets to be detected. The recording part 132 records data in which history information of thus detected operations (hereinafter, referred to as a "process sequence log SL") is recorded in the auxiliary storage part 102, for example. It is noted that a "system call" means an application program interface (API) that the OS 11 has.

In FIG. 3, an example is depicted in which an OS patch op is applied which is a patch for the OS 11 and a middleware patch mp is applied which is a patch for the middleware 12, as examples of a unique-form patch. In the example, in a process of applying the middleware patch mp, operations such as file replacement, registry change, file editing and so forth are carried out, and calls for system calls for carrying out the operations are detected (hooked) by the recording part 132. Further, in a process of applying the OS patch op, operations such as file replacement, registry change, file editing, restarting the OS 11 (OS restarting) and so forth are carried out, and calls for system calls for carrying out the operations are detected (hooked) by the recording part 132. It is noted that file replacement means replacing (overwriting) an existing file by a new file. File editing means rewriting a part of an existing file. Registry change means changing the contents of a registry.

The script generation part 133 generates a script file SF in which a script including commands for carrying out the operations recorded in the process sequence log SL is described. That is, the script file SF is a file in which processes to be carried out when the common-form patch CP is applied are described. The script may have a form such that a computer (a patch applying apparatus 20, described later) to which the common-form patch CP is applied can interpret the script.

The patch generation part 134 generates an archive file including the script file SF, a new file to be used for replacement and/or the like. The generated archive file is the common-form patch CP. According to the embodiment, a common-form patch CP is obtained from an OS patch op and a middleware patch mp, having different forms, and has a common form.

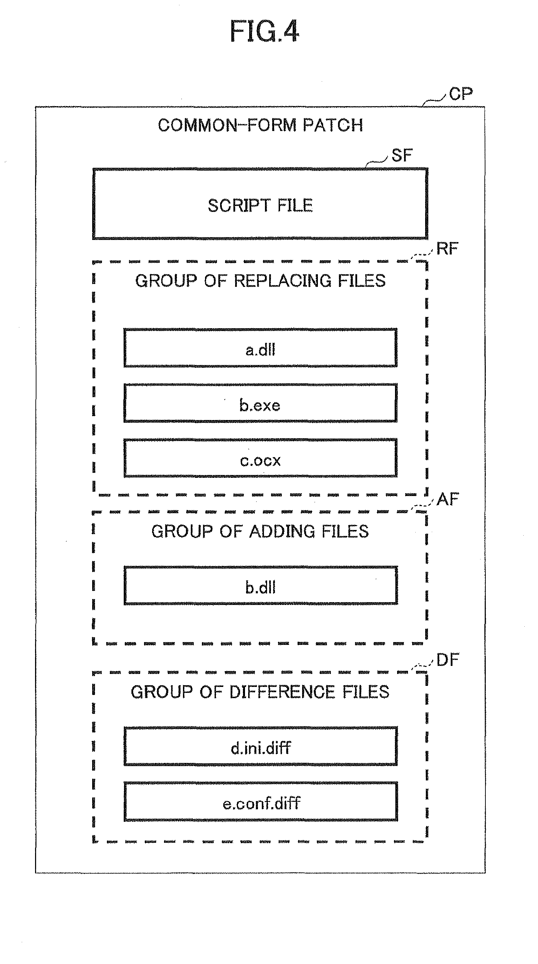

FIG. 4 depicts one example of a structure of a common-form patch CP. In FIG. 4, in a common-form patch CP, a script file SF, a group of replacing files RF, a group of adding files AF and a group of difference files DF are included.

A script file SF has been described above. The group of replacing files RF is a collection of files to be used to replace existing files (hereinafter, referred to as "replacing files"). In a case where no file replacement is carried out in a unique-form patch from which the common-form patch CP is to be obtained through conversion, the common-form patch CP does not need to include the group of replacing files RF. The group of adding files AF is a collection of files to be newly added. In a case where adding a file(s) is not carried out in a unique-form patch from which the common-form patch CP is to be obtained through conversion, the common-form patch CP does not need to include the group of adding files AF.

The group of difference files DF is a collection of files in which for respective files to be edited in file editing, differences between states before editing (before updating) and states after editing (after updating) are recorded. In a case where no file editing is carried out in a unique-form patch from which the common-form patch CP is to be obtained through conversion, the common-form patch CP does not need to include the group of difference files DF.

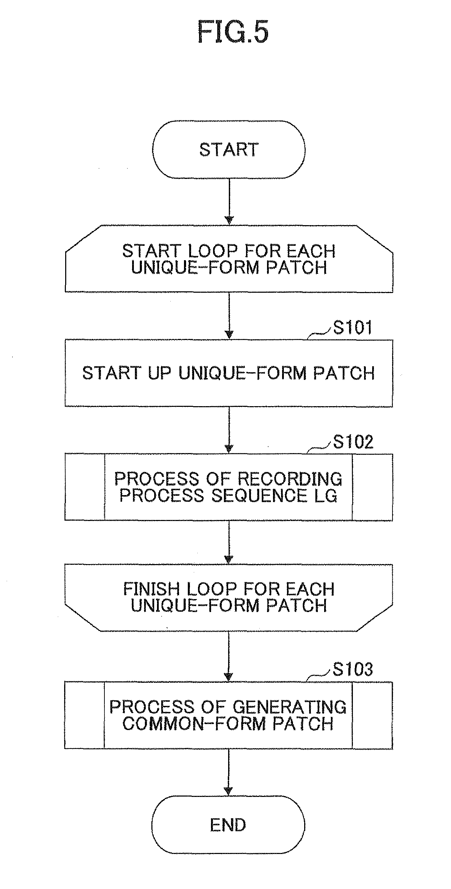

Below, processes that the patch generation apparatus 10 carries out will be described. FIG. 5 is a flowchart generally illustrating one example of a process of generating a common-form patch.

In step S101, the start-up part 131 starts up, as a process, one of unique-form patches that are to be converted into a common-form patch CP. For example, a list of file names of unique-form patches to be converted is recorded in a certain file, and the start-up part 131 reads one file name from the certain file and starts up the unique-form patch corresponding to the read file name.

In response to the starting up of the unique-form patch, the recording part 132 starts monitoring calls for system calls, and carries out a process of recording a process sequence log SL (step S102). As a result, the process sequence log SL is recorded in the auxiliary storage unit 102.

Steps S101 and S102 are repeated the number of times corresponding to the number of the unique-form patches to be converted. For example, according to the embodiment, steps S101 and S102 are carried out for each of the OS patch op and middleware patch mp.

When executions of steps S101 and S102 have been completed for all of the unique-form patches to be converted, the script generation part 133 and the patch generation part 134 carry out a process of generating a common-form patch CP (step S103). As a result, a script file SF is generated, and further a common-form patch CP is generated. It is noted that in a case where plural unique-form patches are to be converted, a single common-form patch CP is generated for the plural unique-form patches. However, common-form patches CP may be generated separately for the respective unique-form patches.

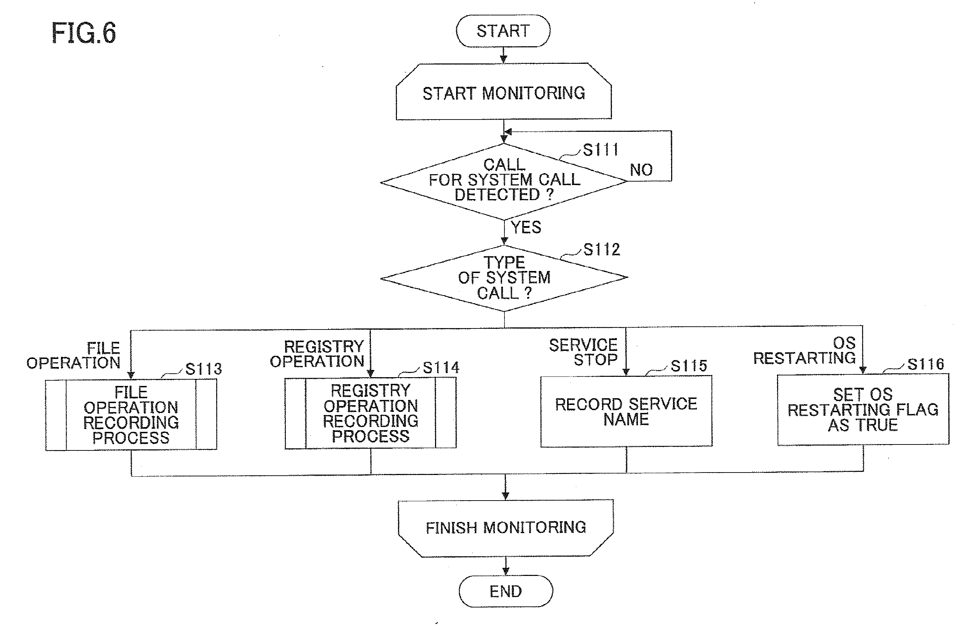

Next, details of step S102 will be described. FIG. 6 is a flowchart illustrating one example of a process of recording a process sequence log.

After starting monitoring calls for system calls, the recording part 132 waits for a call for a system call to be carried out by a unique-form patch of a process that has been started by the start-up part 131 (step S111). When having detected the call for a system call (step S111 YES), the recording part 132 hooks the system call and determines the type of the system call (step S112). According to the embodiment, system calls are classified into four types, i.e., "file operation", "registry operation", "service stop" and "OS restarting". System calls classified into "file operation" are those for carrying out operations of operating (accessing) files such as file editing, file replacement and so forth in FIG. 3. System calls classified into "registry operation" are those for carrying out operations of operating (accessing) registries such as registry change and so forth in FIG. 3. System calls classified into "service stop" are those for stopping a process that has been started up. A "process that has been started up" means a process of a program included in software to which a unique-form patch is to be applied, such as a process corresponding to a service provided by the OS 11. System calls classified into "OS restarting" are those for restarting the OS 11. Which type each system call belongs to (i.e., correspondence information indicating correspondences between respective system calls and corresponding types) may be stored in the auxiliary storage unit 102. Then, the recording part 132 may read the correspondence information and determine the type of a system call that has been called.

In a case where the type of the called system call is "file operation", the recording part 132 carries out a process of recording the contents of "operating a file" in the process sequence log SL (file operation recording process) (step S113).

In a case where the type of the called system call is "registry operation", the recording part 132 carries out a process of recording the contents of "operating a registry" in the process sequence log SL (registry operation recording process) (step S114).

In a case where the type of the called system call is "service stop", the recording part 132 carries out a process of recording an identification name of a service (program) as a stopping target (hereafter, referred to as a "service name") in a stopping-target service list SL1 as a part of the process sequence log SL (step S115).

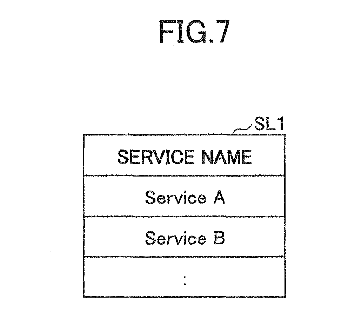

FIG. 7 depicts one example of the stopping-target service list. As depicted in FIG. 7, in the stopping-target service list SL1, a list of the service names of services as stopping targets is recorded. It is noted that "stopping a service" is carried out by a unique-form patch in a case where, for example, an operation is to be carried out by the unique-form patch on a file, a registry or the like in which setting information for the service or the like is recorded.

In a case where the type of the called system call is "OS restarting", the recording part 132 sets an OS restarting flag as "true". The OS restarting flag is data that has an initial value "false" and is recorded in a certain file inside the auxiliary storage unit 102, for example. It is noted that restarting of the OS 11 may be carried out, for example, for the purpose of making a process of applying a unique-form patch effective.

Steps S112 through S116 are carried out each time when a system call is called during a period in which the process corresponding to the unique-form patch monitored is in the started up state. When having detected an end of the process, the recording part 132 finishes the process of FIG. 6.

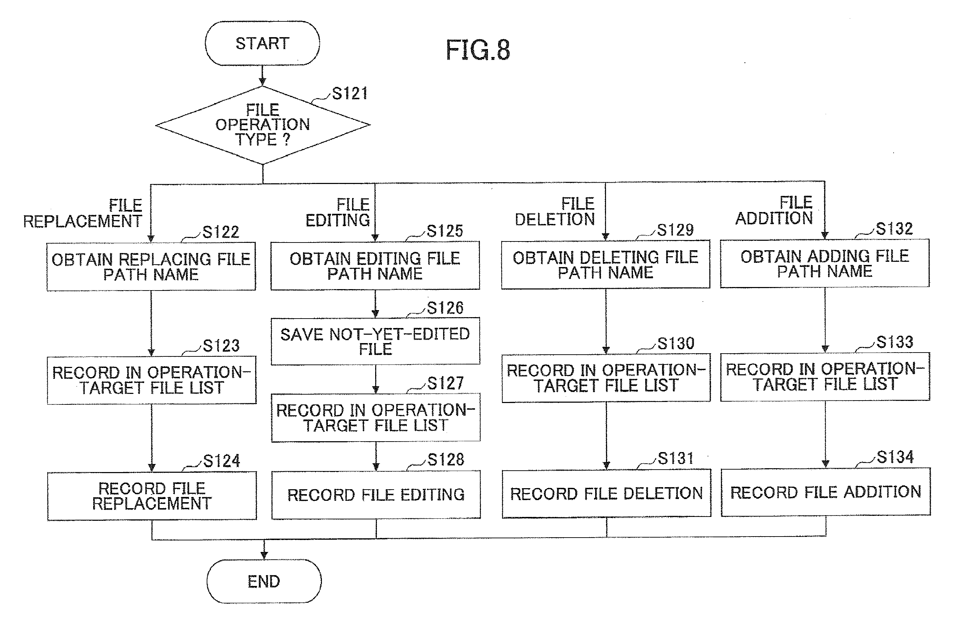

Next, details of step S113 of FIG. 6 will be described. FIG. 8 is a flowchart illustrating one example of the file operation recording process.

In step S121, the recording part 132 determines the file operation type of the called system call. According to the embodiment, file operation types are classified into "file replacement", "file editing", "file deletion", "file addition" and so forth. "File replacement" and "file editing" have been described above. "File deletion" is deleting an existing file. "File addition" is adding a new file (that has not existed so far).

It is noted that which file operation type each system call belongs to (i.e., correspondence information indicating correspondences between respective system calls and corresponding file operation types) may be previously stored in the auxiliary storage unit 102, for example. Then, the recording part 132 may read the correspondence information and determine the file operation type of a called system call.

In a case where the file operation type of the called system call is "file replacement", the recording part 132 obtains a file path name of a file to be replaced from the contents of the call for the system call (an argument or the like) (step S122). Since the recording part 132 has hooked the call for the system call, the recording part 132 can obtain the contents of calling (an argument or the like) at a time the system call is called. Therefore, it is possible to obtain the file path name of the file to be replaced from the argument or the like of the system call. It is noted that as a specific example of "file replacement", for example, replacement of a binary file may be cited, such as an executable file, a dynamic link library or the like included in the OS 11 or the middleware 12.

Next, the recording part 132 records the obtained file path name in a operation-target file list SL2 as a part of the process sequence log SL (step S123).

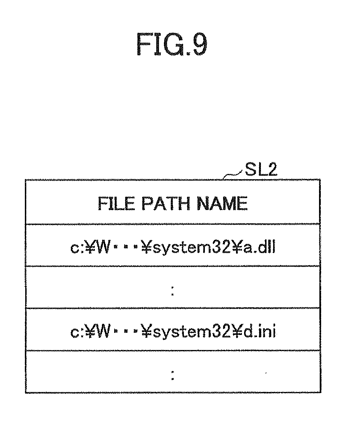

FIG. 9 depicts one example of the operation-target file list SL2. As depicted in FIG. 9, in the operation-target file list SL2, a list of file path names of files as operation targets is recorded.

Next, the recording part 132 records, in a resource operation record list SL3 as a part of the process sequence log SL, that replacement of the file corresponding to the obtained file path name has been carried out (step S124).

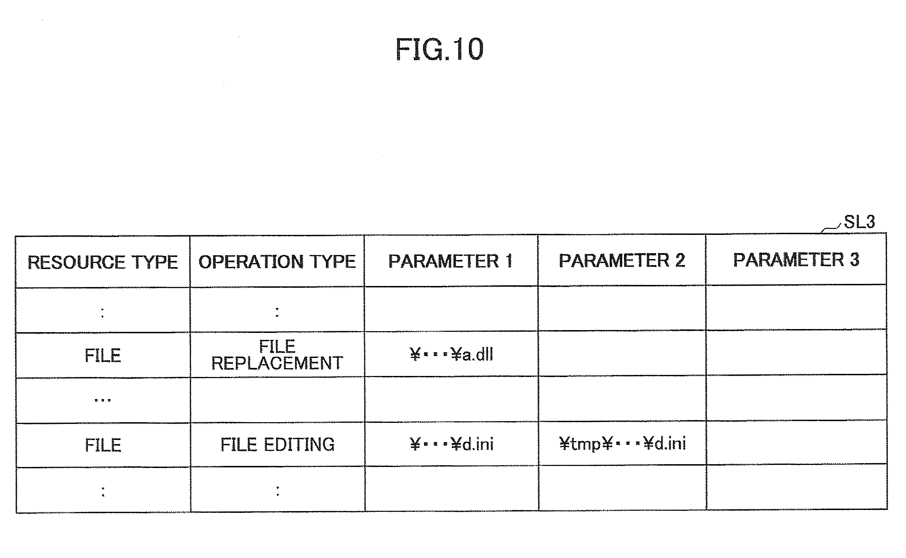

FIG. 10 depicts one example of the resource operation record list SL3. As depicted in FIG. 10, in the resource operation record list SL3, details of the operation contents are recorded separately for the respective software resources as operation targets. In FIG. 10, a resource type, an operation type, and parameters 1 through 3 are one example of the details of the operation contents.

The resource type is a type of a software resource as an operation target. In a case where an operation target is a file, "FILE" is recorded.

The operation type is a type of an operation to be carried out on a software resource. In a case where an operation target is a file, the file operation type determined in step S121 is recorded. Values recorded in fields of parameters 1 through 3 differ depending on the operation type. In a case where the operation type is file replacement, a file path name of a file to be replaced is recorded in the field of parameter 1.

It is noted that after step S124, the called system call that has been hooked is released by the recording part 132. As a result, the process of the system call itself (file replacement) is carried out.

In a case where the file operation type of the called system call is "file editing", the recording part 132 obtains a file path name of a file to be edited from the contents of the call for the system call (an argument or the like) (step S125). As a specific example of "file editing", for example, writing in a text file or the like may be cited.

Next, the recording part 132 saves a copy of the file to be edited in a certain directory (or a folder) (step S126). As mentioned above, the recording part 132 captures a system call at a time when the system call is called. Therefore, it is possible to save the file in a state of not having been edited. Next, the recording part 132 records the file path name obtained in step S125 in the operation-target file list SL2 (see FIG. 9) (step S127). Next, the recording part 132 records in the resource operation record list SL3 (see FIG. 10) that editing of the file corresponding to the obtained file path name has been carried out (step S128). In this case, "FILE" is recorded in the field of resource type, "FILE EDITING" is recorded in the field of operation type, the file path name of the file to be edited is recorded in the field of parameter 1, and the file path name of the saved copy is recorded in the field of parameter 2.

It is noted that after step S127, the called system call that has been hooked is released by the recording part 132. As a result, the process of the system call itself (file editing) is carried out.

In a case where the file operation type of the called system call is "file deletion", the recording part 132 obtains a file path name of a file to be deleted from the contents of the call for the system call (an argument or the like) (step S129). Next, the recording part 132 records the obtained file path name in the operation-target file list SL2 (see FIG. 9) (step S130). Next, the recording part 132 records in the resource operation record list SL3 (see FIG. 10) that deletion of the file corresponding to the obtained file path name has been carried out (step S131). In this case, "FILE" is recorded in the field of resource type, "FILE DELETION" is recorded in the field of operation type, and the file path name of the file to be deleted is recorded in the field of parameter 1.

It is noted that after step S131, the called system call that has been hooked is released by the recording part 132. As a result, the process of the system call itself (file deletion) is carried out.

In a case where the file operation type of the called system call is "file addition", the recording part 132 obtains a file path name of a file to be added from the contents of the call for the system call (an argument or the like) (step S132). Next, the recording part 132 records the obtained file path name in the operation-target file list SL2 (see FIG. 9) (step S133). Next, the recording part 132 records in the resource operation record list SL3 (see FIG. 10) that addition of the file corresponding to the obtained file path name has been carried out (step S134). In this case, "FILE" is recorded in the field of resource type, "FILE ADDITION" is recorded in the field of operation type, and the file path name of the file to be added is recorded in the field of parameter 1.

It is noted that after step S134, the called system call that has been hooked is released by the recording part 132. As a result, the process of the system call itself (file addition) is carried out.

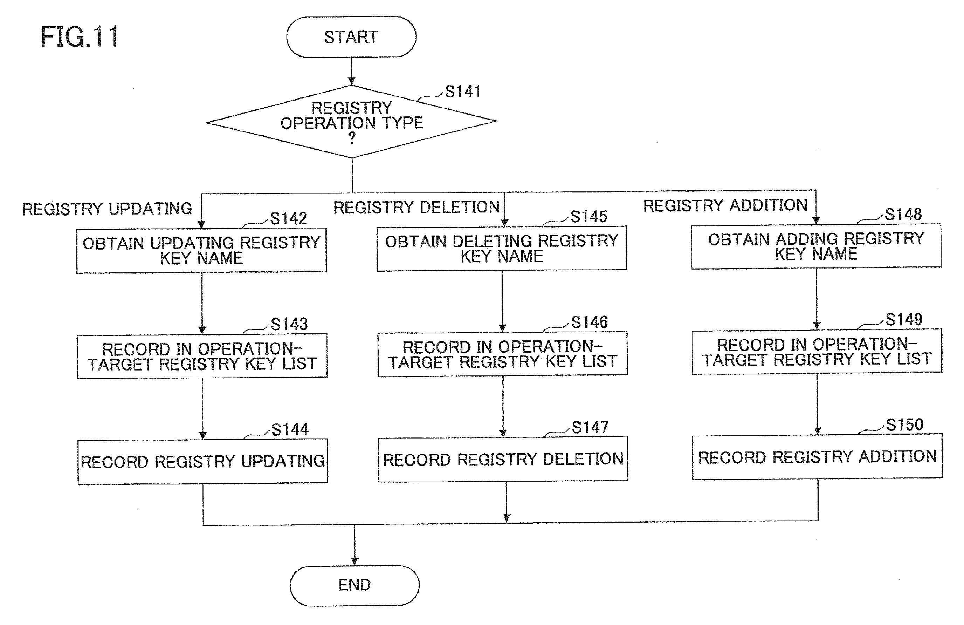

Next, details of step S114 of FIG. 6 will be described. FIG. 11 is a flowchart illustrating an example of a registry operation recording process.

In step S141, the recording part 132 determines a registry operation type of the called system call. According to the embodiment, registry operation types are classified into "registry updating", "registry deletion", "registry addition" and so forth. "Registry updating" is updating the value of an existing registry key. "Registry deletion" is deleting an existing registry key. "Registry addition" is adding a new registry key (that has not existed so far).

It is noted that which registry operation type each system call belongs to (i.e., correspondence information indicating correspondences between respective system calls and corresponding registry operation types) may be previously stored in the auxiliary storage unit 102, for example. Then, the recording part 132 may read the correspondence information and determine the registry operation type of a called system call.

In a case where the registry operation type of the called system call is "registry updating", the recording part 132 obtains information of a registry key to be updated (a key name or the like) from the contents of the call for the system call (an argument or the like), or the registry key to be updated (step S142). Next, the recording part 132 records the obtained information in an operation-target registry key list SL4 as a part of the process sequence log SL (step S143).

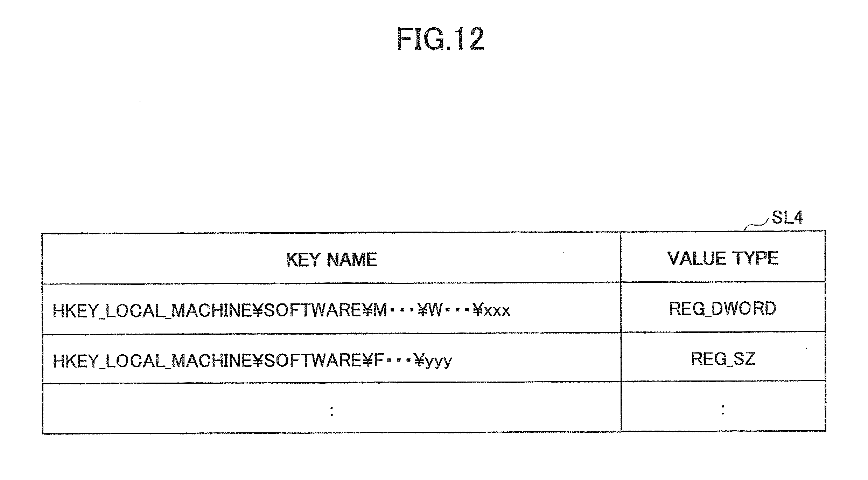

FIG. 12 depicts one example of the operation-target registry key list SL4. As depicted in FIG. 12, in the operation-target registry key list SL4, a list is recorded of key names and value types separately for respective registry keys as operation targets. The key name can be obtained from the contents of the call for the system call. The value type (the type of the value) can be obtained from the registry key corresponding to the key name.

Next, the recording part 132 records in the resource operation record list SL3 (see FIG. 10) that updating of the registry key corresponding to the obtained key name has been carried out (step S144).

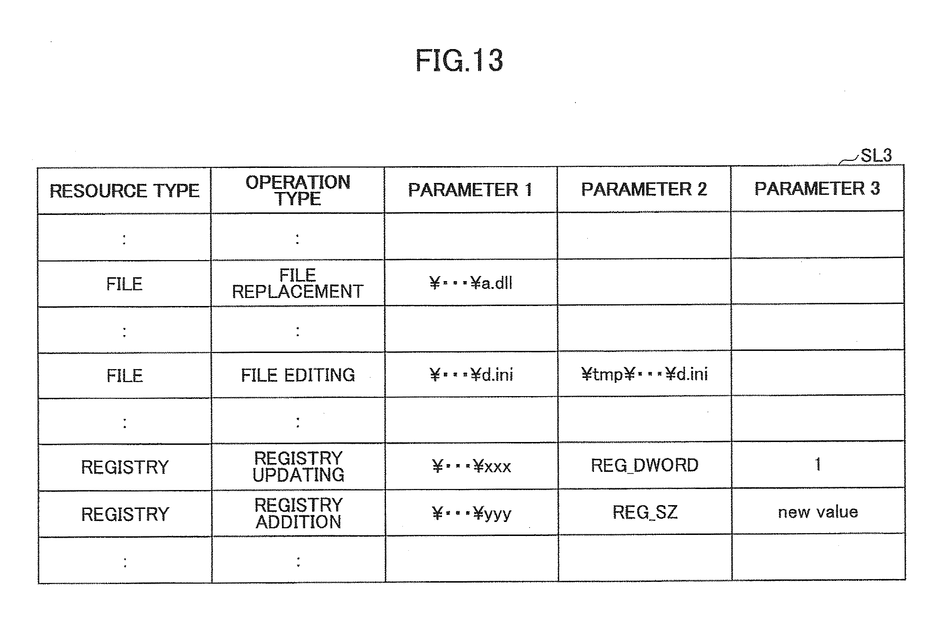

FIG. 13 depicts an example of records concerning registry keys in the resource operation record list SL3. With regard to "registry updating", "REGISTRY" is recorded in the field of resource type, and "REGISTRY UPDATING" is recorded in the field of operation type. Further, in the field of parameter 1, the key name of the registry key to be updated is recorded, and in the field of parameter 2, the value type of the registry key to be updated is recorded. Further, in the field of parameter 3, the value of the registry key to be updated, after the updating, is recorded.

After step S144, the called system call that has been hooked is released by the recording part 132. As a result, the process of the system call itself (registry updating) is carried out.

In a case where the registry operation type of the called system call is "registry deletion", the recording part 132 obtains information of a registry key to be deleted (a key name or the like) from the contents of the call for the system call (an argument or the like), or the registry key to be deleted (step S145). Next, the recording part 132 records the obtained information in the operation-target registry key list SL4 (see FIG. 12) (step S146). Next, the recording part 132 records in the resource operation record list SL3 (see FIG. 13) that deletion of the registry key corresponding to the obtained key name has been carried out (step S147). In this case, "REGISTRY" is recorded in the field of resource type, and "REGISTRY DELETION" is recorded in the field of operation type. Further, in the field of parameter 1, the key name of the registry key to be deleted is recorded.

It is noted that after step S147, the called system call that has been hooked is released by the recording part 132. As a result, the process of the system call itself (registry deletion) is carried out.

In a case where the registry operation type of the called system call is "registry addition", the recording part 132 obtains information of a registry key to be added (a key name or the like) from the contents of the call for the system call (an argument or the like), or the registry key to be added (step S148). Next, the recording part 132 records the obtained information in the operation-target registry key list SL4 (see FIG. 12) (step S149). Next, the recording part 132 records in the resource operation record list SL3 (see FIG. 13) that addition of the registry key corresponding to the obtained key name has been carried out (step S150). In this case, "REGISTRY" is recorded in the field of resource type, and "REGISTRY ADDITION" is recorded in the field of operation type. Further, in the field of parameter 1, the key name of the registry key to be added is recorded. In the field of parameter 2, the value type of the registry key to be added is recorded. In the field of parameter 3, the value of the registry key to be added is recorded.

It is noted that after step S150, the called system call that has been hooked is released by the recording part 132. As a result, the process of the system call itself (registry addition) is carried out.

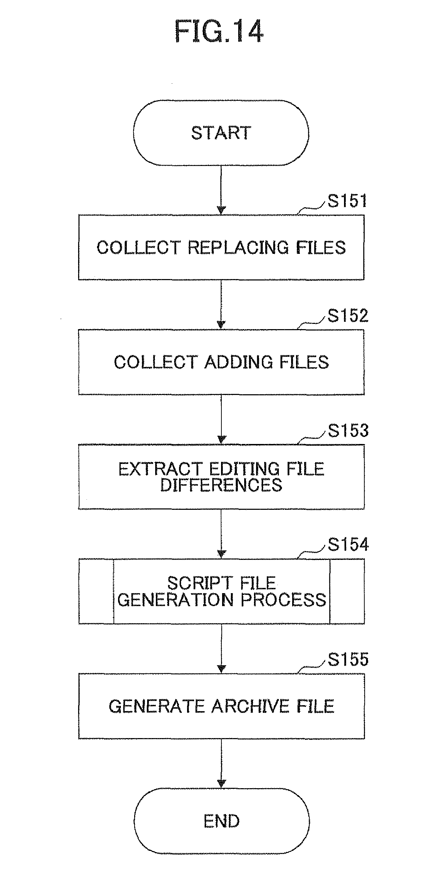

Next, details of step S103 of FIG. 5 will be described. FIG. 14 is a flowchart illustrating an example of a process of generating a common-form patch.

In step S151, the patch generation part 134 collects replacing files. Specifically, the patch generation part 134 extracts records having the resource type of "FILE" and the operation type of "FILE REPLACEMENT" from the resource operation record list SL3 (see FIG. 13). The patch generation part 134 stores, in a certain directory, copies of the files corresponding to the file path names recorded in the parameter 1 of the respective extracted records.

Next, the patch generation part 134 collects adding files (step S152). Specifically, the patch generation part 134 extracts records having the resource type of "FILE" and the operation type of "FILE ADDITION" from the resource operation record list SL3 (see FIG. 13). The patch generation part 134 stores, in a certain directory, copies of the files corresponding to the file path names recorded in the parameter 1 of the respective extracted records.

Next, the patch generation part 134 extracts difference information between before and after editing, and generates a file in which the extracted difference information is recorded (hereinafter, referred to as a "difference file") for each of files to be edited (step S153). Specifically, the patch generation part 134 extracts records having the resource type of "FILE" and the operation type of "FILE EDITING" from the resource operation record list SL3 (see FIG. 13). The patch generation part 134 extracts difference information between the file corresponding to the file path name recorded in the parameter 1 (i.e., the file of having been edited) and the file corresponding to the file path name recorded in the parameter 2 (i.e., the file not having been edited) for each of the extracted records. The patch generation part 134 generates a difference file in which the extracted difference information is recorded, and records a file path name of the difference file in the parameter 3 of the record. Thereby, the file path names of the difference files are associated with the file path names of the files to be edited, respectively.

Next, the patch generation part 134 causes the script generation part 133 to generate a script file SF (step S154). As a result, the script file SF is generated.

Next, in step S155, the patch generation part 134 generates an archive file including the group of replacing files RF collected in step S151, the group of adding files AF collected in FIG. S152, the group of difference file DF generated in step S153 and the script file SF generated in step S154. As depicted in FIG. 4, the archive file is a common-form patch CP.

As the common-form patch CP thus includes the group of replacing files RF and the group of adding files AF, the file groups to be replaced and the file groups to be added by the unique-form patches can be also applied when the common-form patch is applied. Further, as the common-form patch CP includes the groups of difference files DF, editing of the files carried out when the unique-form patches are applied can be also reproduced when the common-form patch is applied.

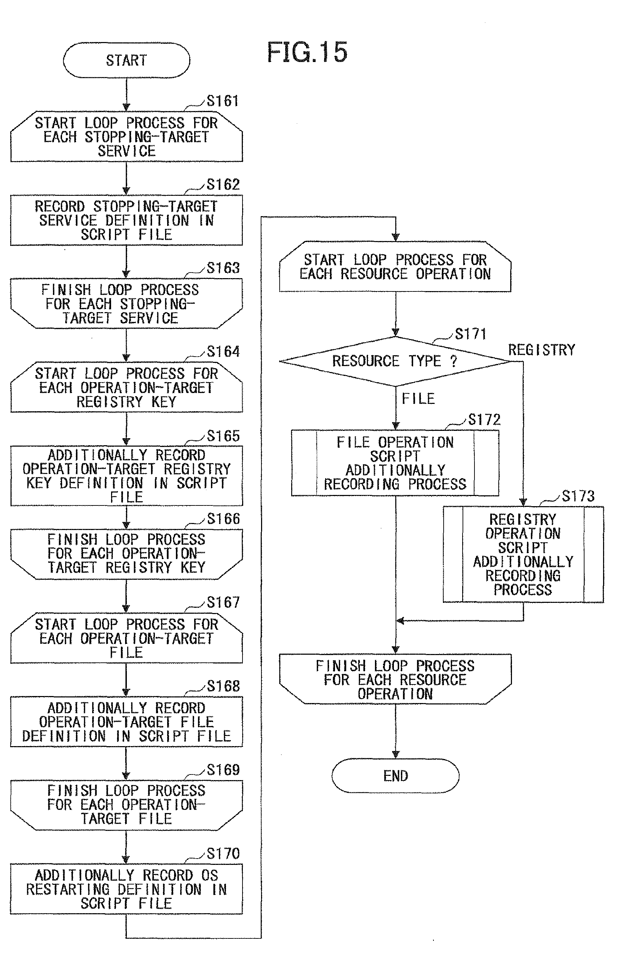

Next, details of step S154 of FIG. 14 will be described. FIG. 15 is a flowchart illustrating an example of a process of generating a script file (script file generation process).

In steps S161 through S163, the script generation part 133 records, in a script file SF, a stopping-target service definition that includes the respective service names recorded in the stopping-target service list SL1 (see FIG. 7).

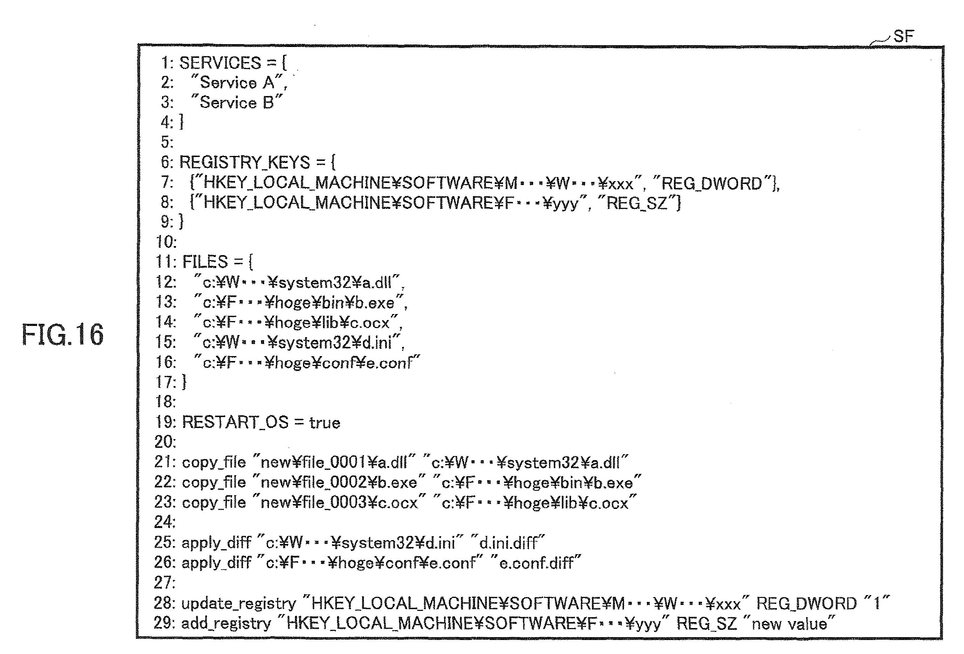

FIG. 16 depicts one example of the description contents of the script file SF. In FIG. 16, lines 1-4 are the stopping-target service definition recorded in steps S161 through S163. That is, the stopping-target service definition has a form of "SERVICES={<service names>}", and the service names of respective services as stopping targets are listed in the part <service names>. It is noted that the line numbers in FIG. 16 are given for the sake of convenience, and do not need to be written in an actual script file SF.

Next, the script generation part 133 additionally records, in the script file SF, an operation-target registry key definition including the key names and the key types of the respective registry keys recorded in the operation-target registry key list SL4 (see FIG. 12) (steps S164 through S166). In the script file SF of FIG. 16, lines 6-9 are the operation-target registry key definition recorded in steps S164 through S166. That is, the operation-target registry key definition has a form of "REGISTRY_KEYS={<registry key information>}", and the key names and the key types of the respective registry keys as operation targets are listed in the part <registry key information>.

Next, the script generation part 133 additionally records, in the script file SF, an operation-target file definition including the file path names of the respective files recorded in the operation-target file list SL2 (see FIG. 9) (steps S167 through S169). In the script file SF of FIG. 16, lines 11-17 are the operation-target file definition recorded in steps S167 through S169. That is, the operation-target file definition has a form of "FILES={<file path names>}", and the file path names of the respective files as operation targets are listed at the part <file path names>.

Next, the script generation part 133 reads the value of the OS restarting flag and additionally records, in the script file SF, an OS restarting definition (step S170). In the script file SF of FIG. 16, line 19 is the OS restarting definition recorded in step S170. That is, the OS restarting definition has a form of "RESTART_OS={<OS restarting flag>}", and the value of the OS restarting flag is recorded in the part <OS restarting flag>. The OS restarting definition is one example of an instruction to restart the OS. As the OS restarting definition is recorded in the script file SF, restarting of the OS 11 can be also reproduced when the common-form patch is applied, in a case where restarting of the OS 11 is carried out when the unique-form patch is applied. The number of the OS restarting definitions recorded in the script file SF is 1 even when operations of restarting the OS 11 have been carried out for the respective plural unique-form patches. Therefore, it is possible to integrate the operations of restarting the OS 11 carried out for the respective plural unique-form patches into one time of restarting the OS 11.

Next, the script generation part 133 carries out steps S171 through S173 for each of the records of the resource operation record list SL3 (see FIG. 13).

In step S171, the script generation part 133 proceeds to one of branches of the process flow depending on whether the resource type of the record to be processed is "FILE" or "REGISTRY". In a case where the resource type is "FILE", the script generation part 133 additionally records, in the script file SF, a script concerning file operation (a file operation script) (step S172). In FIG. 16, lines 21-26 correspond to the file operation script.

In a case where the resource type is "REGISTRY", the script generation part 133 additionally records, in the script file SF, a script concerning registry operation (a registry operation script) (step S173). In FIG. 16, lines 28-29 correspond to the registry operation script.

When steps S171 through S173 have been finished for all of the records of the resource operation record list SL3, the process of FIG. 15 is finished.

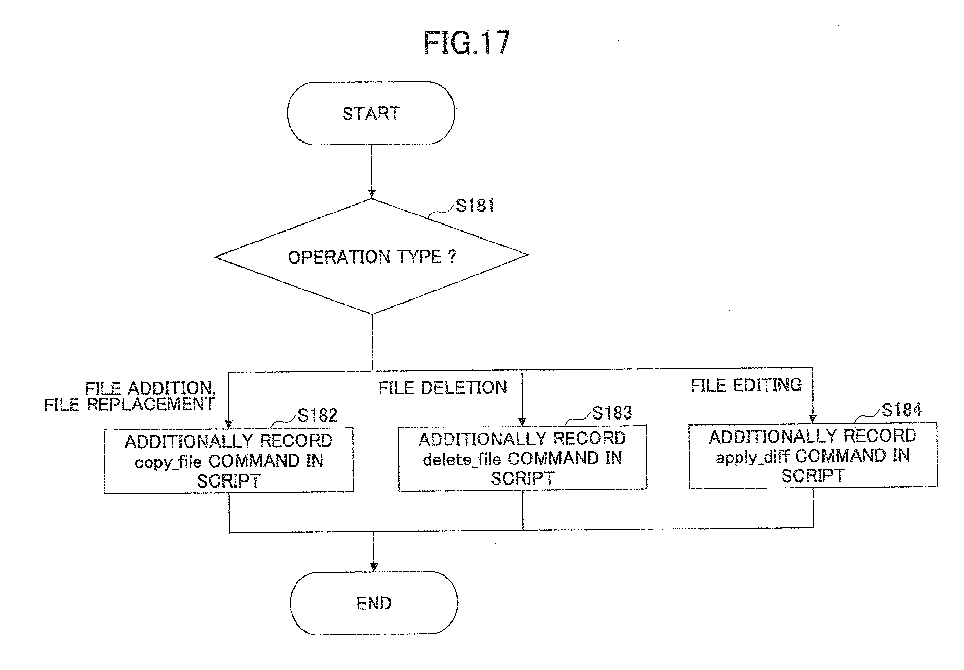

Next, details of step S172 of FIG. 15 will be described. FIG. 17 is a flowchart illustrating one example of a process of additionally recording a file operation script (file operation script additionally recording process).

In step S181, the script generation part 133 proceeds to one of branches of the process flow depending on the operation type of a record to be processed (i.e., a record in the resource operation record list SL3 (see FIG. 13)). In a case where the operation type of the record is "file addition" or "file replacement", the script generation part 133 additionally records a line including a copy_file command in the script file SF (step S182). In FIG. 16, in lines 21-23, copy_file commands have been described. A copy_file command is a command indicating an instruction to copy a file, and has the following form:
copy_file <a file path name of a copy source> <a file path name of a copy destination>

The script generation part 133 uses the file path name of the file corresponding to the record, of the files included in the group of adding files AF and the group of replacing files RF (a file path name in the archive file of the common-form patch), as <a file path name of a copy source>. The script generation part 133 uses the file path name recorded in the parameter 1 of the record as <a file path name of a copy destination>.

In a case where the operation type of the record is "file deletion", the script generation part 133 additionally records a line including a delete_file command in the script file SF (step S183). A delete_file command is a command indicating an instruction to delete a file, and has the following form:
delete_file <a file path name of a file to be deleted>

The script generation part 133 uses the file path name recorded in the parameter 1 of the record as <a file path name of a file to be deleted>.

In a case where the operation type of the record is "file editing", the script generation part 133 additionally records a line including an apply_diff command in the script file SF (step S184). In FIG. 16, in lines 25-26, apply_diff commands have been described. An apply_diff command is a command indicating an instruction to apply difference information to a file, and has the following form:
apply_diff <a file path name of a file to apply difference information> <a file path name of a difference file>

The script generation part 133 uses the file path name recorded in the parameter 1 of the record as <a file path name of a file to apply difference information>, and uses the file path name recorded in the parameter 3 of the record as <a file path name of a difference file>.

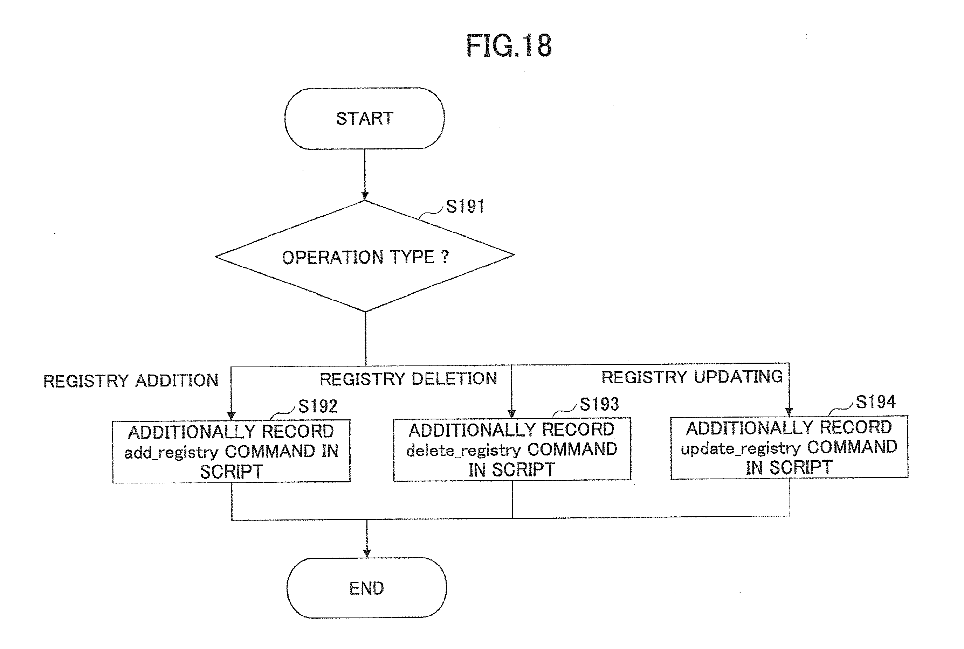

Next, details of step S173 of FIG. 15 will be described. FIG. 18 is a flowchart illustrating one example of a process of additionally recording a registry operation script (registry operation script additionally recording process).

In step S191, the script generation part 133 proceeds to one of branches of the process flow depending on the operation type of a record to be processed (i.e., a record in the resource operation record list SL3 (see FIG. 13)). In a case where the operation type of the record is "REGISTRY ADDITION", the script generation part 133 additionally records a line including an add_registry command in the script file SF (step S192). In FIG. 16, in line 29, an add_registry command is described. An add_registry command is a command indicating an instruction to add a registry key, and has the following form:
add_registry <key name> <value type> <value>

The script generation part 133 uses the key name recorded in the parameter 1 of the record as <key name>, uses the value type recorded in the parameter 2 of the record as <value type> and uses the value recorded in the parameter 3 of the record as <value>.

In a case where the operation type of the record is "REGISTRY DELETION", the script generation part 133 additionally records a line including a delete_registry command in the script file SF (step S193). A delete_registry command is a command indicating an instruction to delete a registry key, and has the following form:
delete_registry <key name>

The script generation part 133 uses the key name recorded in the parameter 1 of the record as <key name>.

In a case where the operation type of the record is "REGISTRY UPDATING", the script generation part 133 additionally records a line including an update_registry command in the script file SF (step S194). In FIG. 16, in line 28, an update_registry command is described. An update_registry command is a command indicating an instruction to update a registry key, and has the following form:
update_registry <key name> <value type> <value>

The script generation part 133 uses the key name recorded in the parameter 1 of the record as <key name>, uses the value type recorded in the parameter 2 of the record as <value type> and uses the value recorded in the parameter 3 of the record as <value>.

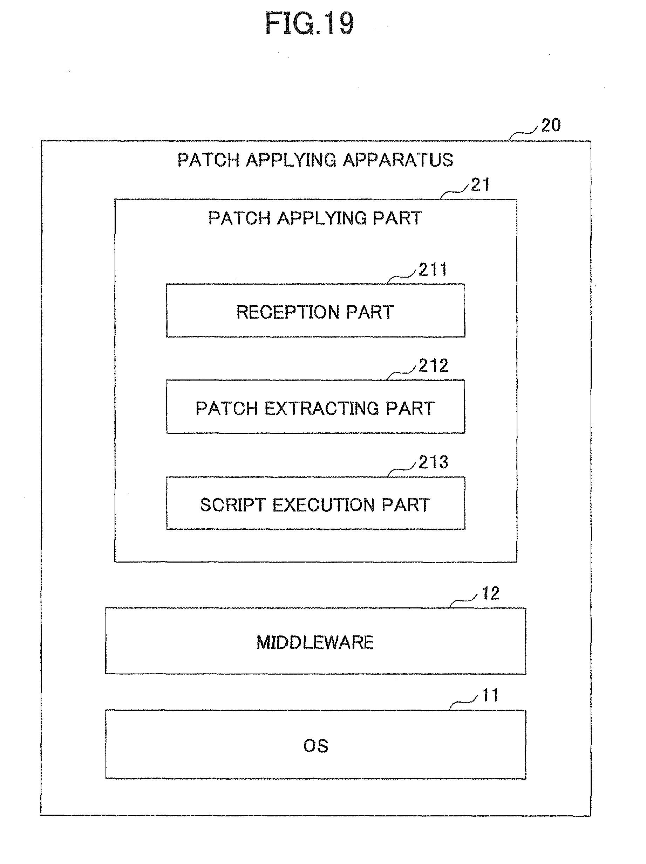

Next, an apparatus to which a common-form patch CP generated as mentioned above is to be applied (referred to as a "patch applying apparatus") will be described. FIG. 19 depicts a software configuration example of a patch applying apparatus 20 according to the embodiment. In FIG. 19, the same reference numerals are given to the same parts as those of FIG. 2. That is, the patch applying apparatus 20 has the same OS 11 and middleware 12 as those of the patch generation apparatus 10.

The patch applying apparatus 20 further includes a patch applying part 21. The patch applying part 21 is realized by a process performed by a CPU of the patch applying apparatus 20 when a program installed in the patch applying apparatus 20 is executed by the CPU. In FIG. 19, the patch applying part 21 includes a reception part 211, a patch extracting part 212 and a script execution part 213.

The reception part 211 receives a common-form patch CP delivered via a communication network. Delivery of a common-form patch CP may be carried out by the patch generation part 10, or by another computer which manages the common-form patch. Further, a common-form patch CP may be received by another way than received via a communication network. For example, a common-form patch CP may be delivered in a form of being stored in a portable recording medium. In this case, the reception part 211 reads the common-form patch CP from the recording medium that is set in the patch applying apparatus 20.

The patch extracting part 212 extracts file groups included in the common-form patch CP that is an archive file. The script execution part 213 performs a process in accordance with a script described in a script file SF included in the common-form patch CP.

It is noted that the hardware configuration of the patch applying apparatus 20 may be the same as or similar to that depicted in FIG. 1.

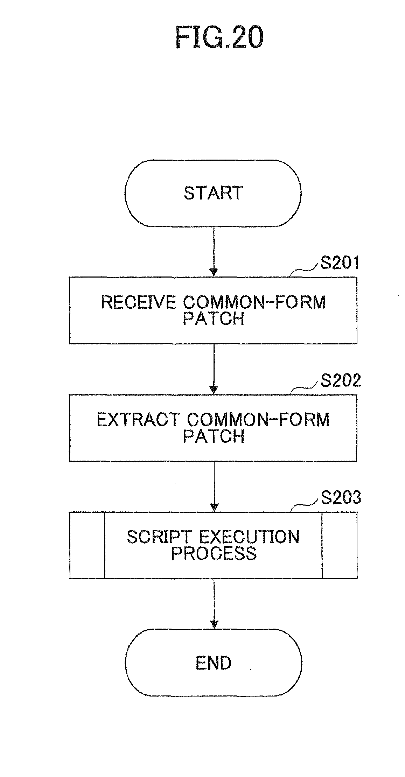

Below, processes carried out by the patch applying apparatus 20 will be described. FIG. 20 is a flowchart illustrating an example of a process of applying a common-form patch.

In step S201, the reception part 211 receives a common-form patch CP delivered via a communication network. Next, the patch extracting part 212 decompresses the common-form patch in a certain directory (step S202). As a result, a script file SF, a group of replacing files RF, a group of adding files AF, a group of difference files DF, and so forth, included in the common-form patch CP, are extracted.

Next, the script execution part 213 performs processes in accordance with the script described in the script file SF (step S203).

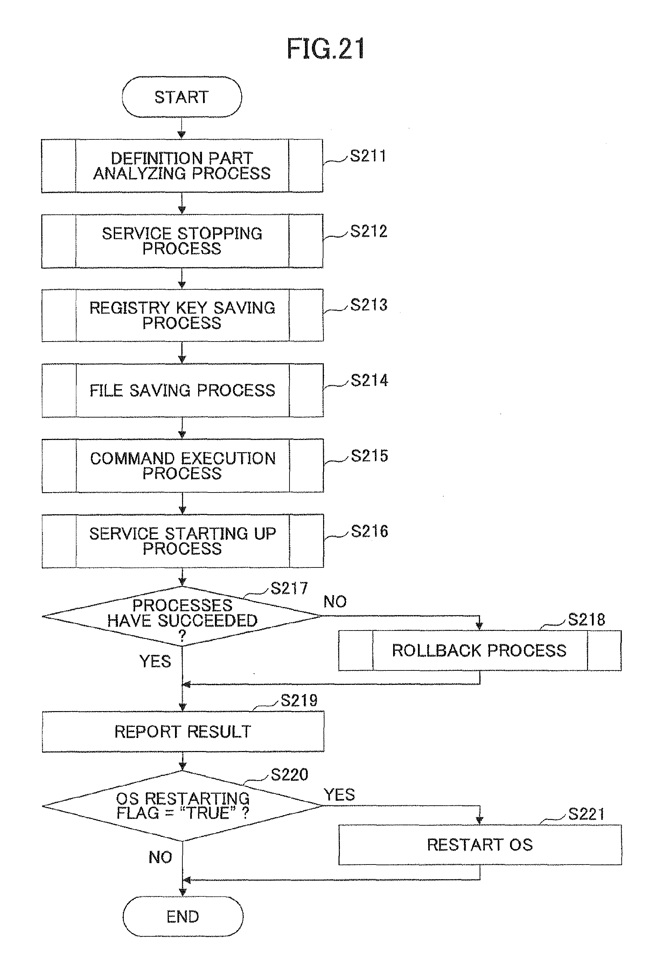

Next, details of step S203 will be described. FIG. 21 is a flowchart illustrating an example of a process of executing a script.

In step S211, the script execution part 213 carries out a process of analyzing definition parts of the script file SF. The definition parts mean a stopping-target service definition, an operation-target registry key definition, an operation-target file definition and an OS restarting definition. By analyzing the definition parts, specifically, a stopping-target service list SL1 (see FIG. 7), an operation-target registry key list SL4 (see FIG. 12), an operation-target file list SL2 (see FIG. 9), and a restarting flag are restored in a memory unit of the patch applying apparatus 20.

Next, the script execution part 213 stops the processes corresponding to the service names included in the restored stopping-target service list SL1 (see FIG. 7) (step S212). This is for the purpose of preventing the operations performed by the processes from obstructing operations to apply the group of replacing files RF, the group of adding files AF, the group of difference files DF and so forth.

Next, the script execution part 213 saves the registry keys corresponding to the key names included in the restored operation-target registry key list SL4 (see FIG. 12) (step S213). Next, the script execution part 213 saves the files corresponding to the file path names included in the restored operation-target file list SL2 (see FIG. 9) (step S214). The steps S213 and S214 are processes to be carried out to prepare for a rollback process (recovery process) to be carried out in a case where applying the common-form patch CP has ended in failure.

Next, the script execution part 213 executes commands of the script file SF (step S215). Thus, for example, the processes according to the respective commands described in lines starting from line 21 of FIG. 16 are performed. As a result, the group of replacing files RF, the group of adding files AF, the group of difference files DF and so forth are applied to (or reflected in) the OS 11 or the middleware 12 of the patch applying apparatus 20. Next, the script execution part 213 starts the processes corresponding to the service names included in the stopping-target service list SL1 (see FIG. 7) (step S216).

In a case where an error has occurred during execution of step S215 or S216 (step S217 NO), the script execution part 213 performs a rollback process (step S218). By the rollback process, the OS 11 and the middleware 12 of the patch applying apparatus 20 are returned to the states of step S215 not having been executed.

On the other hand, in a case where execution of steps S215 and S216 has succeeded (step S217 YES) or subsequent to execution of step S218, the script execution part 213 transmits to, for example, the computer which has delivered the common-form patch CP, information indicating whether execution of the script has succeeded (i.e., whether applying the common-form patch CP has succeeded) (step S219). Next, in a case where the OS restarting flag is "true" (step S220 YES), the script execution part 213 restarts the OS 11 of the patch applying apparatus 20 (step S221). By the restarting of the OS 11, the applying of the common-form patch CP is made effective in the patch applying apparatus 20. Thus, the process of executing the script is finished.

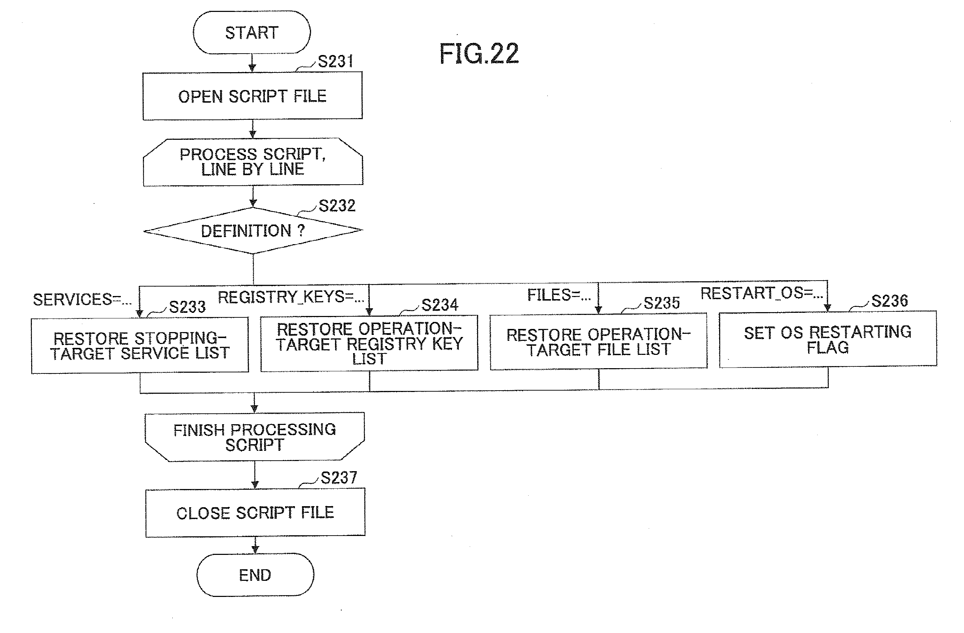

Next, details of step S211 of FIG. 21 will be described. FIG. 22 is a flowchart illustrating one example of a process of analyzing a definition part of a script file SF.

In step S231, the script execution part 213 opens the script file SF. Next, the script execution part 213 reads the script file SF, line by line, and proceeds to one of branches of the process flow according to the definition of the read line (step S232).

In a case where the read line starts by "SERVICES=", that is, the line is the start line of a stopping-target service definition, the script execution part 213 restores the stopping-target service list SL1 (see FIG. 7) in the memory unit based on the stopping-target service definition (step S233). In a case where the read line starts by "REGISTRY_KEYS=", that is, the line is the start line of an operation-target registry key definition, the script execution part 213 restores the operation-target registry key list SL4 (see FIG. 12) in the memory unit based on the operation-target registry key definition (step S234).

In a case where the read line starts by "FILES=", that is, the line is the start line of an operation-target file definition, the script execution part 213 restores the operation-target file list SL2 (see FIG. 9) in the memory unit based on the operation-target file definition (step S235). In a case where the read line starts by "RESTART_OS=", that is, the line is the start line of an OS restarting definition, the script execution part 213 sets an OS restarting flag based on the OS restarting definition (step S236).

When steps S232 through S236 have been executed for all the definitions included in the script file SF, the script execution part 213 closes the script file SF (step S237).

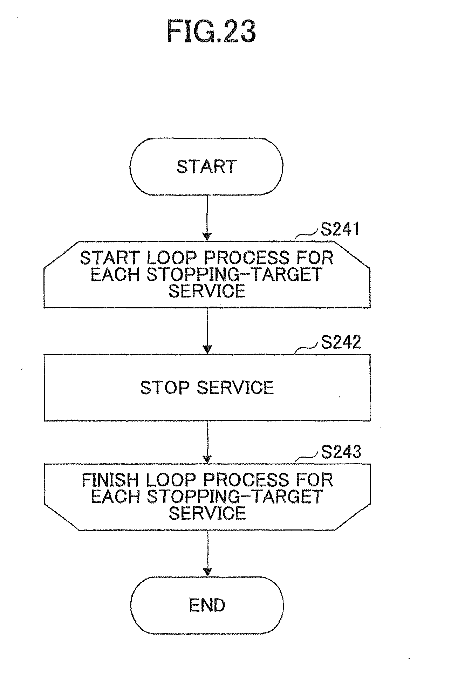

Next, details of step S212 of FIG. 21 will be described. FIG. 23 is a flowchart illustrating an example of a process of stopping services.

In steps S241 through S243, the script execution part 213 stops the processes of the respective services in the same order as that in the restored stopping-target service list SL1 (see FIG. 7).

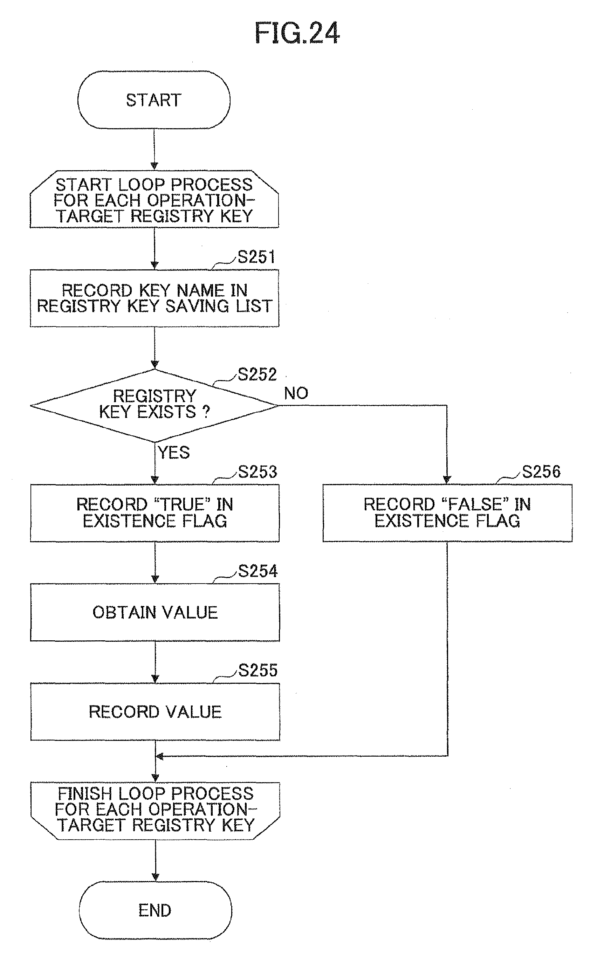

Next, details of step S213 of FIG. 21 will be described. FIG. 24 is a flowchart illustrating one example of a process of saving registry keys.

The script execution part 213 executes steps S251 through S256 for each of the registry keys included in the restored operation-target registry key list SL4 (see FIG. 12).

In step S251, the script execution part 213 transfers the key name and the value type of the registry key to be processed to a registry key saving list L5 from the operation-target registry key list SL4 (see FIG. 12).

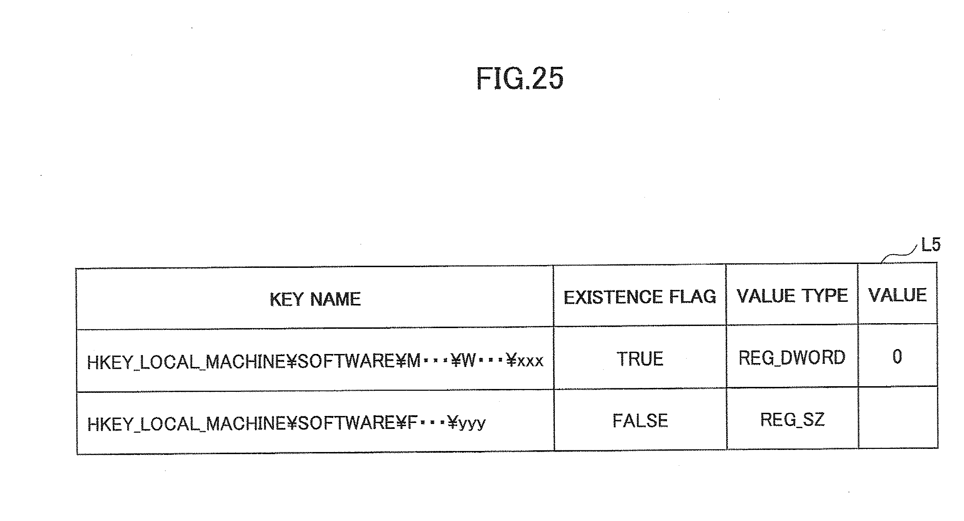

FIG. 25 depicts one example of the registry key saving list. As depicted in FIG. 25, in the registry key saving list L5, a key name, an existence flag, a value type, a value and so forth are recorded for each of the registry keys included in the operation-target registry key list SL4 (see FIG. 12). The existence flag is information indicating whether (true) or not (false) the registry key exists in a registry of the patch applying apparatus 20. It is noted that the value is recorded only for the registry that exists in the patch applying apparatus 20. The registry key saving list L5 is stored in the memory unit of the patch applying apparatus 20, for example.

Next, the script execution part 213 determines whether a registry key having the key name and the value type the same as those of the registry key to be processed exists in the registry of the patch applying apparatus 20 (step S252). In a case where the corresponding registry key exists in the patch applying apparatus 20 (step S252 YES), the script execution part 213 records "true" in the existence flag of the record corresponding to the registry key to be processed (step S253). Next, the script execution part 213 obtains the value of the registry key from the registry of the patch applying apparatus 20 (step S254). Next, the script execution part 213 records the obtained value in the record corresponding to the registry key in the registry key saving list L5 (step S255). Thus, the registry key is saved in the registry key saving list L5.

On the other hand, in a case where the corresponding registry key does not exist (step S252 NO), the script execution part 213 records "false" in the existence flag of the record corresponding to the registry key (step S256). Thus, the fact that the registry key does not exist in the registry of the patch applying apparatus 20 is recorded in the registry key saving list S5.

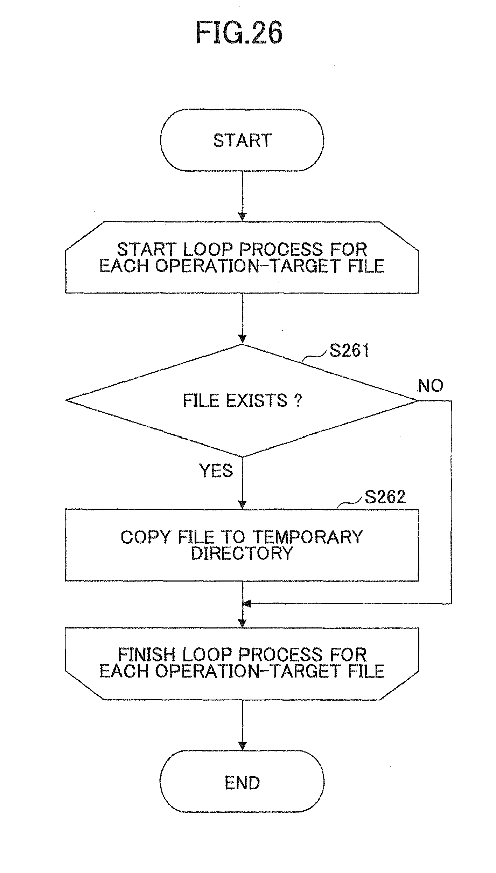

Next, details of step S214 of FIG. 21 will be described. FIG. 26 is a flowchart illustrating one example of a process of saving a file.

The script execution part 213 executes steps S261 and S262 for each of the file path names included in the restored operation-target file list SL2 (see FIG. 9).

In step S261, the script execution part 213 determines whether a file having the file path name the same as the file path name to be processed exists in an auxiliary storage unit (file system) in the patch applying apparatus 20. In a case where the corresponding file exists (step S261 YES), the file is copied to a temporary directory (step S262). As a result, the file is saved in the temporary directory.

On the other hand, in a case where the corresponding file does not exist (step S262 NO), copying to the temporary directory is not carried out.

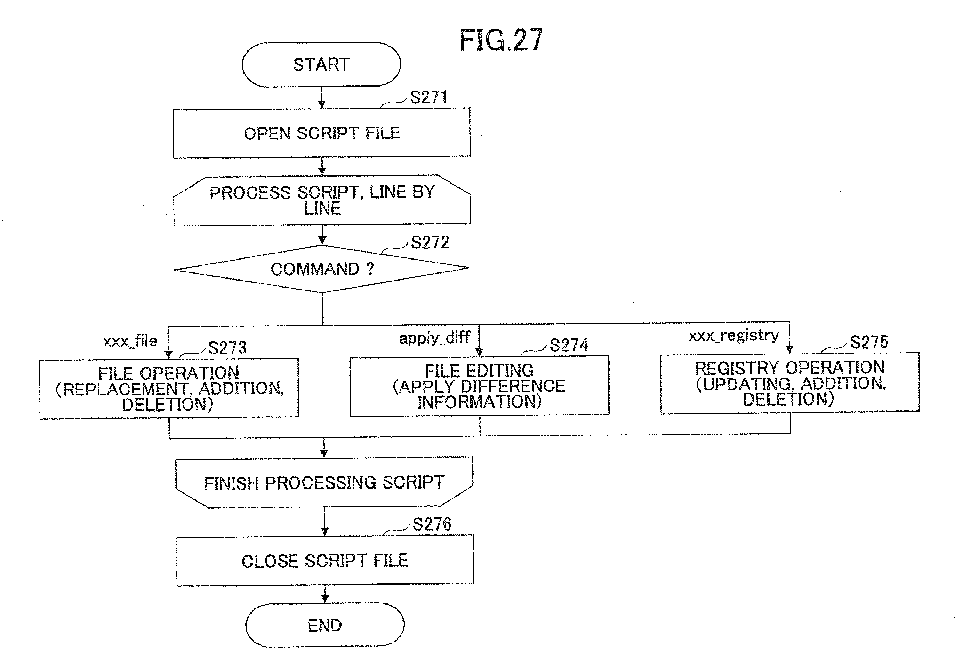

Next, details of step S215 of FIG. 21 will be described. FIG. 27 is a flowchart illustrating one example of a process of executing a command of a script.

In step S271, the script execution part 213 opens the script file SF. Next, the script execution part 213 reads the script file, line by line, and executes one of braches of the process flow depending on the command of the read line (step S272).

In a case where the command of the read line is a copy_file command or a delete_file command, the script execution part 213 carries out the operation corresponding to the command on a file (step S273). Specifically, in a case of a copy_file command, the script execution part 213 copies the file designated as the copy source in the command, of the group of replacing files RF or the group of the adding files AF extracted from the common-form patch CP, to the copy destination designated in the command. Thus, file replacement or file addition is carried out. Further, in a case of a delete_file command, the script execution part 213 deletes the file designated to be deleted in the command from the auxiliary storage unit (file system) of the patch applying apparatus 20.

In a case where the command of the read line is an apply_diff command, the script execution part 213 applies the difference information stored in the difference file designated in the command to the file designated in the command and stored in the auxiliary storage unit (file system) of the patch applying apparatus 20 (step S274). The difference file is one included in the group of difference files DF extracted from the common-form patch CP.

In a case where the command of the read line is an update_registry command, an add_registry command or a delete_registry command, the script execution part 213 carries out the operation corresponding to the command on a registry key in the registry of the patch applying apparatus 20 (step S275). Specifically, in a case of an update_registry command, the script execution part 213 updates the value of the registry key corresponding to the key name and the value type designated in the command by the value designated in the command. In a case of an add_registry command, the script execution part 213 generates a registry key corresponding to the key name and the value type designated in the command and sets the value designated in the command in the generated registry key. In a case of a delete_registry command, the script execution part 213 deletes the registry key corresponding to the key name designated in the command.

When steps S272 through S275 have been carried out for all the commands included in the script file SF, the script execution part 213 closes the script file SF (step S276).

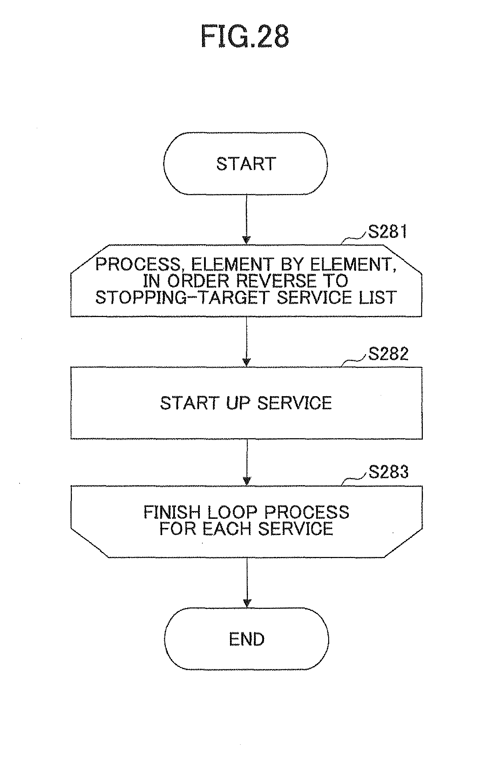

Next, details of steps S216 of FIG. 21 will be described. FIG. 28 is a flowchart illustrating an example of a process of starting up a service.

In steps S281 through S283, the script execution part 213 starts the processes of the respective services in the order, reverse to the order in the restored stopping-target service list SL1 (see FIG. 7). It is noted that starting up the respective services in the order, reverse to the order in the stopping-target service list SL1, means that the respective services are started up in the order reverse to the order in which the respective services have been stopped. This is because the dependence relationships between the respective services are considered. That is, usually, a dependence source (which depends on the other) seems to be stopped sooner than a dependence destination (which is depended on by another). This is because there is a likelihood that trouble may occur in the dependence source when the dependence destination is stopped first. On the other hand, at a time of starting up, the dependence destination may be started first. This is because there is a likelihood that the dependence source is not started up properly in a condition where the dependence destination has not been started yet. In consideration of these circumstances, the respective services are started in the order, reverse to the order in the stopping-target service list SL1, for the purpose of causing the dependence destination to be started first.

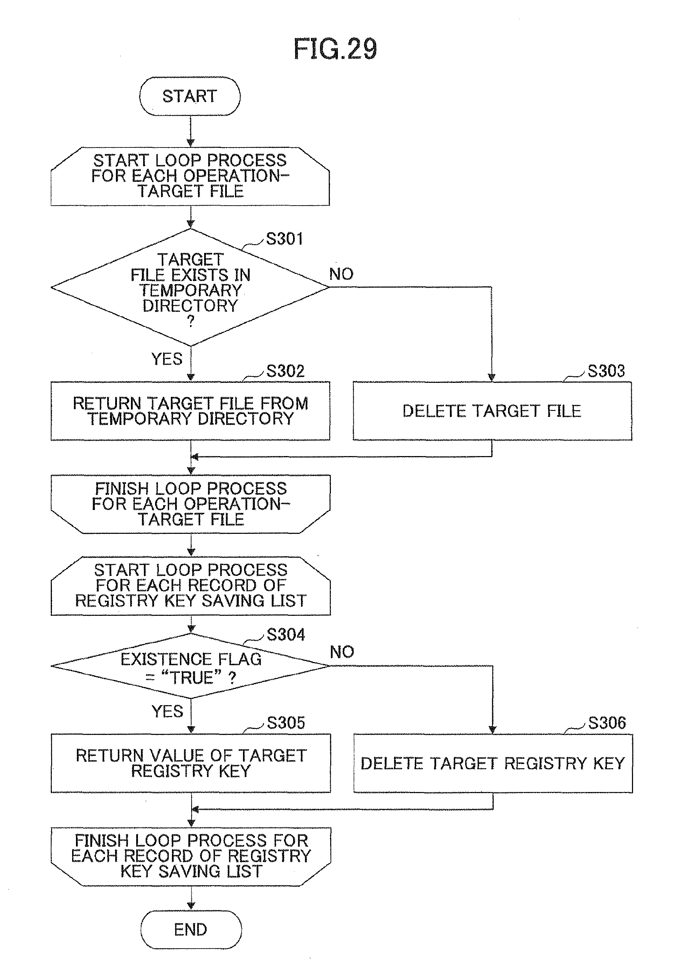

Next, details of step S218 of FIG. 21 will be described. FIG. 29 is a flowchart illustrating one example of a rollback process.

The script execution part 213 executes steps S301 through S303 for each of the file path names included in the restored operation-target file list SL2. In step S301, the script execution part 213 determines whether the file corresponding to the file path name to be processed exists in the temporary directory. The temporary directory is the directory used as the saving destination in step S262 of FIG. 26.

In a case where the file exists in the temporary directory (step S301 YES), the script execution part 213 copies or moves the file to the position indicated by the file path name to be processed in the auxiliary storage unit of the patch applying apparatus 20 (step S302). On the other hand, in a case where the corresponding file does not exist in the temporary directory (step S301 NO), the script execution part 213 deletes the file corresponding to the file path name to be processed from the auxiliary storage unit of the patch applying apparatus 20 (step S303). This is because the fact that the corresponding file does not exist in the temporary directory means that the file corresponding to the file path name to be processed is a file that has been added through execution of a command of the script.

Next, the script execution part 213 executes steps S304 through S306 for each of the records of the registry key saving list L5 (see FIG. 25). In step S304, the script execution part 213 determines whether the existence flag of the record to be processed is "true" (step S304). In a case where the existence flag is "true" (step S304 YES), the script execution part 213 sets the value recorded in the record to be processed in the registry key corresponding to the key name of the record, in the registry of the patch applying apparatus 20 (step S305).

On the other hand, in a case where the existence flag is "false" (step S304 NO), the script execution part 213 deletes the registry key corresponding to the key name of the record to be processed, from the registry of the patch applying apparatus 20 (step S306). This is because the registry key is a registry key having been added through execution of a command of the script.

Thus, the states of the software resources of the patch applying apparatus 20 are returned to the states of the common-form patch CP not having been applied.

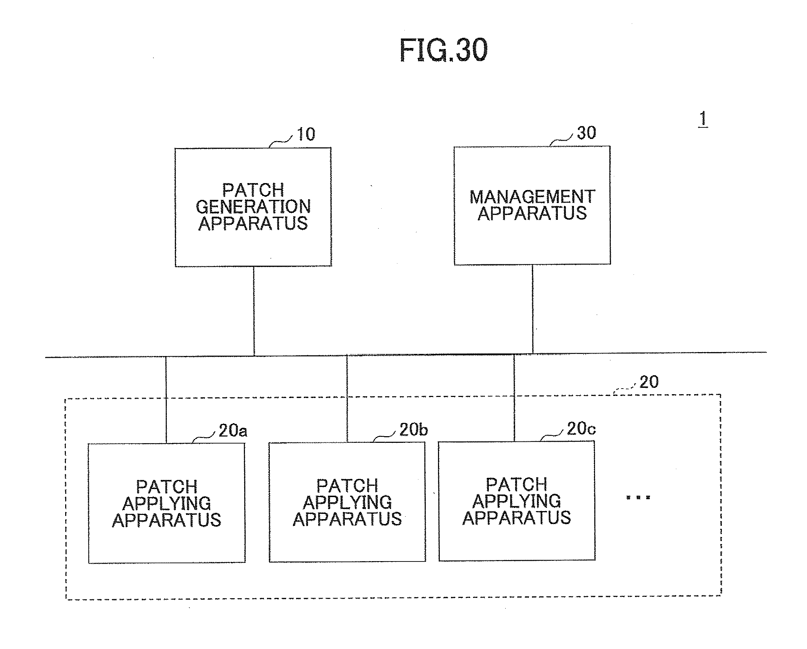

The patch generation apparatus 10 and the patch applying apparatus 20 according to the embodiment may be applied to an information processing system such as that depicted in FIG. 30.

FIG. 30 depicts one example of an information processing system. In an information processing system 1 of FIG. 30, a patch generation apparatus 10, plural patch applying apparatuses 20 such as patch applying apparatuses 20a, 20b, 20c and so forth, and a management apparatus 30 are connected together using a network such as a Local Area Network (LAN), the Internet or the like.

The management apparatus 30 is a computer that carries out management and delivery of a common-form patch CP generated by the patch generation apparatus 10.

For example, in response to completion of generation of a common-form patch CP, the patch generation apparatus 10 automatically transmits the generated common-form patch CP to the management apparatus 30. In response to having received the common-form patch CP, the management apparatus 30 delivers the common-form patch CP to the respective patch applying apparatuses 20. IP addresses, Uniform Resource Locators (URL) or the like of the patch applying apparatuses 20 to which the common-form patch CP is thus delivered may be previously set in the management apparatus 30. Alternatively, the management apparatus 30 may search for the patch applying apparatuses 20 using broadcasting before delivering the common-form patch CP.

Patch applying parts 21 of the respective patch applying apparatuses 20 receive the common-form patches CP delivered by the management apparatus 30, and carry out the processes mentioned above as those being carried out by the patch applying part 21.

It is noted that the patch generation apparatus 10 and the respective patch applying apparatuses 20 may be those other than physical computers (physical machines), and may be virtual computers (virtual machines). In this case, a configuration may be adopted in which the patch generation apparatus 10 and the respective patch applying apparatuses 20 operate in a single physical machine.

Further, the software environments of the respective patch applying apparatuses 20 may be built as a result of the software environment (the OS 11, the middleware 12 and so forth) of the patch generation apparatus 10 as a virtual machine being cloned in the respective patch applying apparatuses 20 as virtual machines. In this case, as long as a program(s) for causing a computer to function as the patch generation part 134 and the patch applying part 21 has (have) been installed in the patch generation apparatus 10, it is possible to automatically provide the patch applying parts 21 to the patch applying apparatuses 20 at a time of the cloning.

As described above, according to the embodiment, it is possible to convert a unique-form patch that has a data form and an applying method, which differ depending on each set of software to which the unique-form patch is to be applied or depending on each vendor which releases the unique-form patch, into a patch having a common form without regard to the software to which the patch is to be applied and the vendor which releases the patch. Therefore, a system manager or the like does not need to pay attention to a specific applying method for applying each unique-form patch, it is possible to simplify work of applying the patch, and it is possible to reduce the workload. Therefore, even in a case where there are plural computers to which a patch is to be applied, it is possible to easily automate a process of delivering and applying the patch.

Further, since it is possible to generate a single common-form patch based on plural unique-form patches, it is also possible to simplify work of applying the patch from this viewpoint. In particular, in the common-form patch CP, a script file SF is generated in such a manner that the number of times of carrying out a process of restarting the OS 11 can be made to be 1. Therefore, it is possible to reduce a time for a process of restarting the OS 11.

It is noted that in the embodiment, the script generation part 133 is one example of a first generation part. The patch generation part 134 is one example of a second generation part. A common-form patch CP is one example of an execution program.

Thus, according to the embodiment, it is possible to reduce the workload of applying a patch.

## Claims

1. A generation apparatus comprising:
a recording part configured to detect an operation carried out during a process of applying a patch program and record history information of the operation in a storage part;
a first generation part configured to generate a script including an instruction for performing the operation indicated by the history information; and
a second generation part configured to generate an execution program for executing the patch program based on the generated script.

2. The generation apparatus as claimed in claim 1, wherein
the recording part is configured to record the history information of the operations during the processes of applying plural of the patch programs in the storage part.

3. The generation apparatus as claimed in claim 1 or 2, wherein
the recording part is configured to detect addition or replacement of a software resource during the process of applying the patch program, and record an identification name of the software resource added or replaced in the storage part, and
the second generation part is configured to generate the execution program including the software resource corresponding to the identification name stored in the storage part.

4. The generation apparatus as claimed in any one of claims 1, 2 and 3, wherein
the recording part is configured to detect stopping of a program during the process of applying the patch program, and record an identification name of the stopped program, and
the first generation part is configured to generate the script including the identification name of the program.

5. The generation apparatus as claimed in any one of claims 1, 2, 3 and 4, wherein
the recording part is configured to detect restarting of an operating system during the process of applying the patch program, and record information indicating that restarting of the operating system has been carried out, and
the first generation part is configured to generate the script including an instruction to restart the operating system based on the information.

6. A generation method comprising:
detecting an operation carried out during a process of applying a patch program;
recording history information of the operation in a storage part;
generating a script including an instruction for performing the operation indicated by the history information; and
generating an execution program for executing the patch program based on the generated script.

7. The generation method as claimed in claim 6, wherein
the recording records the history information of the operations during the processes of applying plural of the patch programs in the storage part.

8. The generation method as claimed in claim 6 or 7, wherein
the detecting detects addition or replacement of a software resource during the process of applying the patch program,
the recording records an identification name of the software resource added or replaced in the storage part, and
the generating an execution program generates the execution program including the software resource corresponding to the identification name stored in the storage part.

9. The generation method as claimed in any one of claims 6, 7 and 8, wherein
the detecting detects stopping of a program during the process of applying the patch program,
the recording records an identification name of the stopped program, and
the generating a script generates the script including the identification name of the program.

10. The generation method as claimed in any one of claims 6, 7, 8 and 9, wherein
the detecting detects restarting of an operating system during the process of applying the patch program,
the recording records information indicating that restarting of the operating system has been carried out, and
the generating a script generates the script including an instruction to restart the operating system.

11. A computer readable information recording medium storing a generation program which when executed by one or plural processors, performs:
detecting an operation carried out during a process of applying a patch program;
recording history information of the operation in a storage part;
generating a script including an instruction for performing the operation indicated by the history information; and
generating an execution program for executing the patch program based on the generated script.

12. The computer readable information recording medium as claimed in claim 11, wherein
the recording records the history information of the operations during the processes of applying plural of the patch programs in the storage part.

13. The computer readable information recording medium as claimed in claim 11 or 12, wherein
the detecting detects addition or replacement of a software resource during the process of applying the patch program,
the recording records an identification name of the software resource added or replaced in the storage part, and
the generating an execution program generates the execution program including the software resource corresponding to the identification name stored in the storage part.

14. The computer readable information recording medium as claimed in any one of claims 11, 12 and 13, wherein
the detecting detects stopping of a program during the process of applying the patch program,
the recording records an identification name of the stopped program, and
the generating a script generates the script including the identification name of the program.

15. The computer readable information recording medium as claimed in any one of claims 11, 12, 13 and 14, wherein
the detecting detects restarting of an operating system during the process of applying the patch program,
the recording records information indicating that restarting of the operating system has been carried out, and
the generating a script generates the script including an instruction to restart the operating system.
